# EUROPEAN PATENT SPECIFICATION

(11) **EP 0 708 265 B1**
(45) Date of publication and mention of the grant of the patent: **22.01.2003**
(21) Application number: 95307115.6
(22) Date of filing: 06.10.1995
(51) Int. Cl.: F16F 1/02, F16F 15/121, F16F 1/18

(54) **Undulated spring and damper mechanism**
Wellenförmige Feder und Dämpfungsmechanismus
Mécanisme amortisseur à ressort ondulé

(30) Priority: 14.10.1994 JP 24963694; 14.10.1994 JP 24963794; 14.10.1994 JP 24963894; 14.10.1994 JP 24963994; 07.04.1995 JP 8219195; 18.04.1995 JP 9223295
(43) Date of publication of application: 24.04.1996
(60) Divisional application: 00107657.9
(73) Proprietor: EXEDY CORPORATION, Neyagawa-shi, Osaka 572 (JP)
(72) Inventor: Okubo, Mamoru, Neyagawa-shi, Osaka (JP); Fukushima, Hirotaka, Hirakata-shi, Osaka (JP)
(74) Representative: Pacitti, Paolo

(56) References cited:
- BE-A- 345 632
- DE-A- 4 336 178
- DE-B- 1 233 215
- FR-A- 497 546
- FR-E- 22 636
- US-A- 2 247 839
- US-A- 2 775 105
- US-A- 3 115 337
- US-A- 4 252 302
- US-A- 4 257 510
- PATENT ABSTRACTS OF JAPAN vol. 18, no. 444 (M-1658), 18 August 1994 & JP 06 137341 A (DAIKIN), 17 May 1994,
- PATENT ABSTRACTS OF JAPAN vol. 015, no. 374 (M-1160), 20 September 1991 & JP 03 149417 A (KAYSEVEN CO LTD), 26 June 1991,

## Description

### BACKGROUND OF THE INVENTION

### A. FIELD OF THE INVENTION

The present invention relates to an undulated spring, and a damper mechanism employing the undulated plate spring.

### B. DESCRIPTION OF THE RELATED ART

Damper disc assemblies are generally found in clutch discs and some flywheel mechanisms. In a damper disc assembly, generally, a power input element receives torque from an engine and a power output element transmits the torque to a power output shaft. The power input element and the power output element are typically coupled together by an elastic element. The elastic element can be elastically deformed in circular directions between the power input element and the power output element. Often damper mechanisms also include the elastic element and a hysteresis torque generating mechanism. When torsional vibration is received, the elastic element repeats expansion and contraction in circular directions and may oscillate continuously for a period of time in the absence of the hysteresis torque mechanism. With the hysteresis torque included, oscillations are reduced.

Usually coil springs are used for the elastic element. However, one damper mechanism does use an undulated spring. This damper mechanism is disclosed in Japanese Unexamined Patent Publication No 6-137341. The undulated plate spring includes a plurality of arcuate portions and a plurality of lever portions connecting the arcuate portions in the series. Since the undulated plate spring develops a large amount of elastic energy in unit capacity, it can minimize a widthwise dimension while retaining a sufficient level or torque transmitting capacity.

However, in the prior art, the lever portions of the undulated spring tend to deform. There is little bending moment acting on arcuate portions of the spring, and hence, the arcuate portions are not sufficiently elastically deformed during vibration dampening. Hence, the arcuate portions may not be effectively absorbing vibrations.

Further, the undulated plate spring in the prior art is formed of a single plate material which causes difficulty in processing, and this leads to increase in a fabrication cost. For example, it is necessary to bend the plate material in directions of expansion and contraction of springs in order to form the undulated plate spring, and load of bending the whole plate is so large that it appears that a large-sized machine must be used in the manufacturing process. In addition to that, the material used to make the spring must be of a uniform thickness in order to allow for reduced manufacturing costs.

### SUMMARY OF THE INVENTION

The present invention relates to an undulated spring for a damper mechanism in the form of an elongated, ribbon-like, undulated spring. A spring of this nature is known from JP-A-06 137341.

The invention is characterised in that the undulated spring is formed by a plurality of wire-like spring elements having a plurality of arcuate portions arranged in zigzag pattern and having opening portions, and each of said spring portions having a plurality of lever portions joined at both ends to the opening portions of the arcuate portions thus connecting the arcuate portions, the plurality of wire-like spring elements superimposed one over another to define an undulated spring.

Preferred features of the invention are defined in the Claims.

These and other objects, features, aspects and advantages of the present invention will become more fully apparent from the following detailed description of an embodiment of the present invention when taken in conjunction with the accompanying drawings, in which:

### BRIEF DESCRIPTION OF THE DRAWINGS

Fig 1. is a cross-section view of a clutch disc assembly in accordance with an embodiment of the present invention, wherein the clutch disc assembly includes an undulated plate spring (Fig. 1 is a cross-section taken along the line I - I in Fig. 3);
Fig. 2 is a fragmentary enlargement of a portion of Fig. 1;
Fig. 3 is a view of the clutch disc assembly taken along the line III - III in Fig. 1;
Fig. 4 is a fragmentary perspective view of the undulated plate spring shown removed from the clutch disc assembly; and
Fig. 5 is a fragmentary front view of the undulated plate spring depicted in Fig. 4.

### DETAILED DESCRIPTION OF THE PREFERRED EMBODIMENT

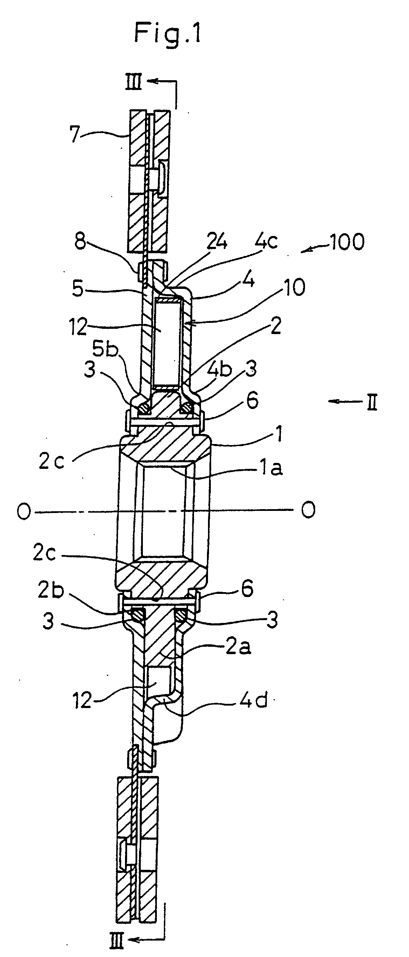

Fig. 1 to Fig. 3 depict a clutch disc assembly 100 in accordance with a preferred embodiment of the present invention. In Fig. 1, the line 0-0 denotes a rotation axis of the clutch disc assembly 100.

A spline hub 1 is disposed in a central portion of the clutch disc assembly 100. The spline hub 1 is couplable to a power input shaft (not shown) of a transmission (not shown). The spline hub 1 is formed with a spline hole 1a. The spline hole 1a has spline which engage corresponding splines formed on the power input shaft of the transmission (not shown). The spline hub 1 is also formed integrally with a flange 2 which protrudes radially outwardly.

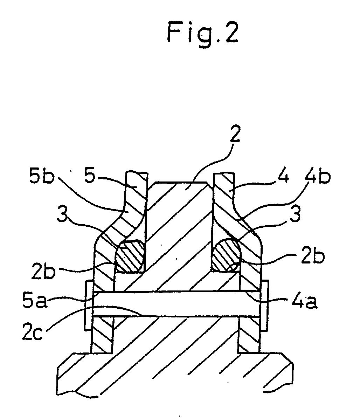

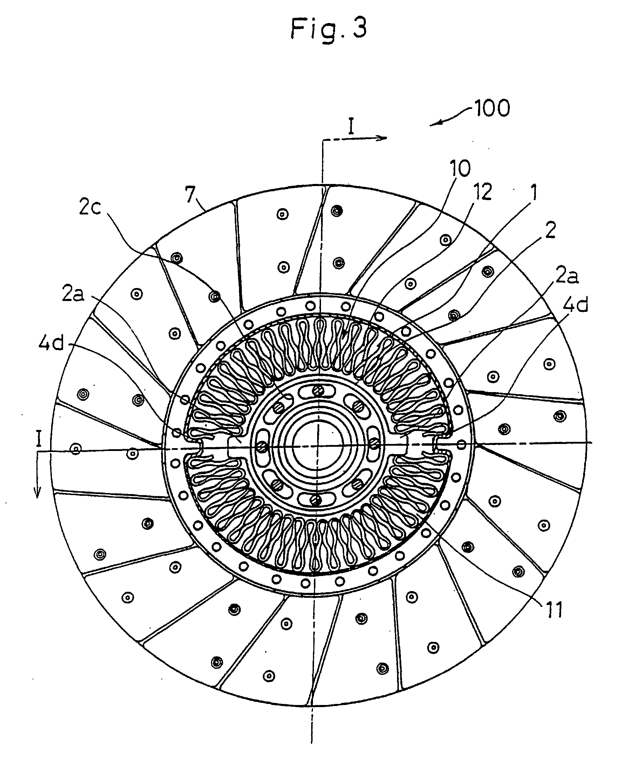

As shown in Fig. 2 and Fig. 3, two projections 2a are formed in positions opposed to each other in radial directions on an outer circumference of the flange 2. On opposite side surfaces of the flange 2, step portions 2b are circularly formed (see Fig. 2), and there are formed a plurality of holes 2c elongated in circular directions at specified intervals (Fig. 3), extending through the flange 2 in axial directions close to an inner circumference of the step portions 2b.

Referring back to Fig. 1, close to an outer circumferential portion of the spline hub 1, a retaining plate 4 and a clutch plate 5, both generally disc-shaped are provided. In inner circumferential portion of the plate 4 and 5, a plurality of hoes 4a and 5a are formed at specified intervals. The plates 4 and 5 are attached to the flange 2 by stop pins 6 at the holes 4a and 5a and the holes 2c in the flange 2. The plates 4 and 5 are configured for limited relative rotary displacement with respect to the flange 2 in an angular range defined by the circumferential length of the holes 2c.

In an inner circumferential portion of the plates 4 and 5, annular curved portions 4b and 5b are respectively formed. A pair of o-rings 3 are confined between the inner surfaces of the annular curved portions 4b and 5b and outer surfaces defined on the step portions 2b. On an outer circumferential portion of the retaining plate 4, a curved portion 4c is formed which extends toward the clutch plate 5. The curved portion 4c along with a cushioning plate 13 is fixed to an outer circumferential portion of the clutch plate 5 by a rivet 8. As is shown in Fig. 3, two engagement portions 4d are formed in the curved portion 4c, opposite each other. The engagement portions 4d are formed to extend radially inward and are formed to correspond to the projections 2a of the flange 2. On opposite surfaces of the cushioning plate 13, friction facings 7 are fixed.

In the above configuration, the plates 4 and 5 provided on opposite sides of the spline hub 1 together with the flange 2 define an annular fluid chamber 10; The fluid chamber 10 is filled with damper oil 11 having a predetermined level of viscosity. The fluid chamber 10 is sealed by the 0-ring 3.

A pair of undulated plate springs 12 are disposed within the fluid chamber 10. The undulated plate springs 12 have a semicircular shape and are circumferentially deformable in response to relative rotation between the plates 4 and 5 and the hub 1. Each undulated plate spring 12 is confined between the opposing projections 2a and the engagement portions 4d.

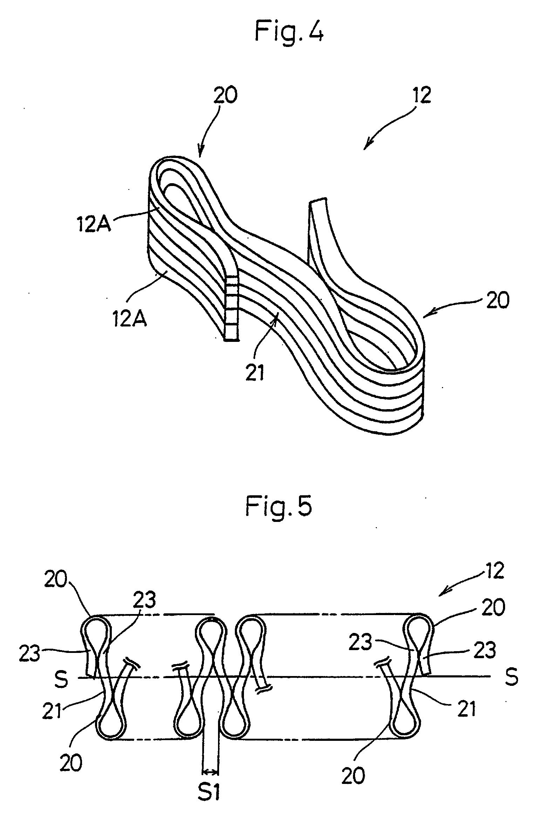

As is shown in Figs. 4 and 5, in a first embodiment, the undulated plate springs 12 are formed with arcuate portions 20 and lever portions 21, have an accordion style configuration, in appearance. The arcuate portions 20 are placed in zigzag arrangement in one direction. The arcuate portions 20 have opening portions 23 open to the length of the arcuate portions 20. Pairs of opening portions 23 oppose each other. Each of the lever portions 21 couple one end of one opening portions 23 of the arcuate portions 20 to an opposed opening portion 23 of an adjacent arcuate portion 20, as is shown in Fig. 5.

The arcuate portions 20 are annular but are not completed circles, each end of each arcuate portion 20 being formed integrally with one lever portion 21. Each of the arcuate portions 20 has generally the same diameter. In a linear orientation, as shown in Fig. 5 (not installed in the clutch disc assembly 100), a clearance gap S₁ is formed between adjacent ones of the arcuate portions 20. The clearance gap S₁ has a predetermined length.

When the undulated plate springs 12 are disposed in an arc-shaped arrangement within the clutch disc assembly 100, the circumferential inner of the opening portions 23 are tightly engaged with each other, as shown in Fig. 3 eliminating the clearance gap S₁. However, the circumferentially outer of the opening portions 23 may be slightly deformed into an extended or expanded state, Specifically, the lever portions 21 may be extending away from each other in a radially outward direction.

The arcuate portions 20 are formed with a material smaller thickness than the lever portions 21. The arcuate portions 20 become gradually smaller in thickness from the opening portions 23 toward intermediate portions, and they are the thinnest in the intermediate portions.

Each of the undulated plate springs 12 is composed of a plurality of wire-like spring elements 12A superimposed one over another, as shown in Fig. 4. The lamination elements 12A are not bonded to each other in the embodiment shown by could be bonded together in an alternate embodiment.

The arcuate portions 20 on opposite ends come in contact with the projections 2a and the engagement portions 4b. Within the fluid chamber 10, the undulated plate springs 12 define a specified clearance gap together with the retaining plate 4, the clutch plate 5 and the flange 2.

An operation of the damper disc assembly will not be described.

When the friction facings 7 are coupled to a flywheel (not shown), torque is applied to the clutch plate 5 and the retaining plate 4. The torque is transmitted from the engagement portions 4d of the retaining plate 4 to the undulated plate springs 12 and then to the spline hub 1 through the flange 2 and eventually output to the power input shaft of the transmission (not shown).

When the clutch disc assembly 100 receives torsional vibration, the plates 4 and 5 as a power input element and the spline hub 1 as a power output element relatively rotate, and the undulated plate springs 12 repeat expansion and contraction in circular directions between them. In this situation, the damper oil 11 contained in the fluid chamber 10 passes through the clearance gap defined by and between the retaining plate 4, the clutch plate 5 and the flange 2, and the undulated plate springs 12. This causes flow of the damper oil 11 to be restricted to produce viscous resistance at a level corresponding to a cross sectional area of the clearance gap. Thus, the torsional vibration is dampened. Since the undulated plate springs 12 may undergo elastic deformation over a large torsional angle, the total flexure or the torsional angle can be increased, as compared with the prior art. Hence, characteristics of low rigidity and wide torsional angle dampen the torsional vibration.

An operation of the damper disc assembly will now be described in conjunction with a situation where the undulated plate springs 12 are compressed. In compression of the undulated plate springs 12, an open angle of the lever portions 21 becomes smaller, bending moment acts on the arcuate portions 20. In this situation, the lever portions 21 move with fulcrums of the opening portions 23, and the arcuate portions 20 are elastically deformed. Since the arcuate portions 20 are smaller in thickness than the lever portions 21, an amount of transformation of the arcuate portions 20 is great, and the arcuate portions 20 retain a large amount of elastic energy. Especially, since the intermediate portions of the arcuate portions 20 are smaller in thickness than the other parts, a sufficient amount of elastic transformation can be attained regardless of a small bending moment acting on the intermediate portions. Additionally, the undulated plate springs 12 are especially small in widthwise dimension, and therefore, they retain a larger amount of elastic energy in unit capacity, compared with the prior art coil springs.

The damper oil 11 within the fluid chamber 10 lubricates the undulated plate springs 12, the plates 4 and 5, and the flange 2, and this promotes smooth expansion and contraction with the undulated plate springs 12 and prevents abrasion of the components.

As has been described, in this embodiment, the undulated plate springs 12 can maintain rigidity as low as the prior art coil springs and keep a small widthwise dimension in axial directions, and hence, a dimension in axial directions of the clutch disc assembly 100 can be sufficiently diminished.

Process steps of fabricating and assembling the undulated plate springs 12 will be explained below.

First, a plurality of strip-like elements are shaped in wave form so that they are varied in width alternately from wide part to narrow part. After that, those elements are bent to form portions equivalent to the arcuate portions 20 and the lever portions 21, and thus, wire-like spring elements 12A are prepared. The wire-like spring elements 12A are superimposed one over another, and the whole of the wire-like spring elements 12A are set in the fluid chamber 10 of the clutch disc assembly 100.

The fabrication process as mentioned above includes a wave form shaping step and a bending step in order to form the lamination elements 12A, and strip-like lamination materials may be processed in either of the steps. This is effective to reduce load, and hence, a processing machine introduced herein may be down-sized. Consequently, the fabrication process is simplified, and a fabrication cost is reduced. Additionally, the assembled lamination elements 12A do not have to be bonded to each other, and this leads to a further reduction in the fabrication cost.

The foregoing description of the embodiments according to the present invention is provided for the purpose of illustration only, and not for the purpose of limiting the invention as defined by the appended claims and their equivalents.

## Claims

1. An undulated spring for a damper mechanism in the form of an elongated, ribbon-like, undulated spring, **characterised in that** the undulated spring (12) is formed by a plurality of wire-like spring elements (12A) having a plurality of arcuate portions (20) arranged in zigzag pattern and having opening portions (23), and each of said spring portions having a plurality of lever portions (21) joined at both ends to the opening portions (23) of the arcuate portions (20) thus connecting the arcuate portions (20), the plurality of wire-like spring elements (12A) superposed one over another to define an undulated spring (12).

2. The undulated spring as claimed in Claim 1, **characterised in that** said arcuate portions (20) are smaller in thickness than said lever portions (21).

3. The undulated spring as claimed in either preceding claim, **characterised in that** intermediate portions of said arcuate portions (20) are smaller in thickness than said opening portions (23).

4. An undulated spring as claimed in Claim 1, **characterised in that** the lever portions (21) are greater in rigidity than the arcuate portions (20).

5. The undulated spring as claimed in any preceding claim, **characterised in that** the arcuate portions (20) become gradually smaller in thickness as they go from the opening portions (23) to intermediate portions.

6. The undulated spring as claimed in any preceding claim, **characterised in that** said arcuate portions (20) have a first elastic deformation characteristic and said lever portions (21) have a second elastic deformation characteristic differing from said first elastic deformation characteristic.

7. The undulated spring as claimed in Claim 6, **characterised in that** said first elastic deformation characteristic is such that said arcuate portions (20) undergo elastic deformation more readily than said lever portions (21) in response to compressive forces exerted on said undulated spring (12).

8. The undulated spring as claimed in any preceding claim, **characterised in that** said arcuate portions (20) are formed with a generally uniform thickness, and said lever portions (21) are formed with a mid-portion having a thickness greater than the thickness of said arcuate portions (20).

## Patentansprüche

1. Eine wellenförmige Feder für einen Dämpfungsmechanismus in Form einer verlängerten, bandartigen, wellenförmigen Feder, **dadurch gekennzeichnet, dass** die wellenförmige Feder (12) durch eine Vielzahl von drahtartigen Federelementen (12A) gebildet ist, die eine Vielzahl von im Zickzackmuster angeordnete gebogene Teile (20) und Öffnungsteile (23) aufweist, und wobei jeder Federteil eine Vielzahl von Hebelteilen (21) aufweist, die an beiden Enden mit den Öffnungsteilen (23) der gebogenen Teile (20) verbunden sind, wodurch die gebogenen Teile (20) verbunden werden, wobei die Vielzahl von drahtartigen Federelementen (12A) aufeinandergelegt sind, um eine wellenförmige Feder (12) festzulegen.

2. Wellenförmige Feder gemäß Anspruch 1, **dadurch gekennzeichnet, dass** die gebogenen Teile (20) dünner als die Hebelteile (21) sind.

3. Wellenförmige Feder gemäß einem der vorhergehenden Ansprüche, **dadurch gekennzeichnet, dass** die mittleren Teile der gebogenen Teile (20) dünner als die Öffnungsteile (23) sind.

4. Wellenförmige Feder gemäß Anspruch 1, **dadurch gekennzeichnet, dass** die Hebelteile (21) steifer als die gebogenen Teile (20) sind.

5. Wellenförmige Feder gemäß einem der vorhergehenden Ansprüche, **dadurch gekennzeichnet, dass** die gebogenen Teile (20) von den Öffnungsteilen (23) in Richtung der mittleren Teile allmählich dünner werden.

6. Wellenförmige Feder gemäß einem der vorhergehenden Ansprüche, **dadurch gekennzeichnet, dass** die gebogenen Teile (20) eine erste elastische Verformungseigenschaft aufweisen und die Hebelteile (21) eine zweite elastische Verformungseigenschaft aufweisen, die sich von der ersten elastischen Verformungseigenschaft unterscheidet.

7. Wellenförmige Feder gemäß Anspruch 6, **dadurch gekennzeichnet, dass** die erste elastische Verformungseigenschaft von der Art ist, dass sich die gebogenen Teile (20) leichter einer elastischen Verformung unterziehen lassen als die Hebelteile (21) als Antwort auf Druckkräfte, die auf die wellenförmige Feder (12) ausgeübt werden.

8. Wellenförmige Feder gemäß einem der vorhergehenden Ansprüche, **dadurch gekennzeichnet, dass** die gebogenen Teile (20) von im Allgemeinen einheitlicher Dicke gebildet sind und die Hebelteile (21) mit einem Mittelteil gebildet sind, der eine Dicke aufweist, die größer als die Dicke der gebogenen Teile (20) ist.

## Revendications

1. Un ressort ondulé destiné à un mécanisme amortisseur ayant la forme d'un ressort allongé, semblable à un ruban et ondulé, **caractérisé en ce que** le ressort ondulé (12) est formé d'une pluralité d'organes faisant ressorts semblables à des fils métalliques (12A) possédant une pluralité de portions arquées (20) agencées selon un motif en zigzag et possédant des portions ouvrantes (23), chacune desdites portions faisant ressorts possédant une pluralité de portions leviers (21) jointes au niveau des deux extrémités aux portions ouvrantes (23) des portions arquées (20) raccordant ainsi les portions arquées (20), la pluralité d'organes faisant ressorts semblables à des fils métalliques (12A) étant superposés les uns sur les autres pour définir un ressort ondulé (12).

2. Le ressort ondulé tel que revendiqué dans la revendication 1, **caractérisé en ce que** lesdites portions arquées (20) sont d'épaisseur plus petite que lesdites portions leviers (21).

3. Le ressort ondulé tel que revendiqué dans l'une ou l'autre revendication précédente, **caractérisé en ce que** des portions intermédiaires desdites portions arquées (20) sont d'épaisseur plus petite que lesdites portions ouvrantes (23).

4. Un ressort ondulé tel que revendiqué dans la revendication 1, **caractérisé en ce que** les portions leviers (21) sont d'une rigidité plus grande que les portions arquées (20).

5. Le ressort ondulé tel que revendiqué dans n'importe quelle revendication précédente, **caractérisé en ce que** l'épaisseur des portions arquées (20) devient de plus en plus petite à mesure qu'elles vont des portions ouvrantes (23) aux portions intermédiaires.

6. Le ressort ondulé tel que revendiqué dans n'importe quelle revendication précédente, **caractérisé en ce que** lesdites portions arquées (20) ont une première caractéristique de déformation élastique et que lesdites portions leviers (21) ont une deuxième caractéristique de déformation élastique qui diffère de ladite première caractéristique de déformation élastique.

7. Le ressort ondulé tel que revendiqué dans la revendication 6, **caractérisé en ce que** ladite première caractéristique de déformation élastique est telle que lesdites portions arquées (20) subissent une déformation élastique plus facilement que lesdites portions leviers (21) en réponse à des forces de compression exercées sur ledit ressort ondulé (12).

8. Le ressort ondulé tel que revendiqué dans n'importe quelle revendication précédente, **caractérisé en ce que** lesdites portions arquées (20) sont formées avec une épaisseur généralement uniforme, et que lesdites portions leviers (21) sont formées avec une portion centrale ayant une épaisseur plus grande que l'épaisseur desdites portions arquées (20).
